# EUROPÄISCHE PATENTSCHRIFT

(11) **EP 0 945 740 B1**
(45) Veröffentlichungstag und Bekanntmachung des Hinweises auf die Patenterteilung: **31.05.2006**
(21) Anmeldenummer: 99104700.2
(22) Anmeldetag: 10.03.1999
(51) Int. Cl.: G01S 13/78

(54) **Verfahren zur Zielerkennung Freund-Feind und Anordnung zur Durchführung des Verfahrens**
Method of IFF recognition and apparatus for same
Procédé d'identification ami-ennemi et moyens pour la mise en oeuvre de ce procédé

(30) Priorität: 26.03.1998 DE 19813242
(43) Veröffentlichungstag der Anmeldung: 29.09.1999
(73) Patentinhaber: EADS Deutschland GmbH, 81663 München (DE)
(72) Erfinder: Füchter, Norbert, 89155 Dellmensingen (DE); Hofele, Franz-Xaver, 73072 Donzdorf (DE); Liem, Tiang-Gwan, 89081 Ulm (DE)

(56) Entgegenhaltungen:
- DE-A- 4 339 669
- GB-A- 2 059 709

## Beschreibung

Die Erfindung geht aus von einem Verfahren zur Zielerkennung Freund-Feind nach dem Oberbegriff des Patentanspruchs 1 und einer Anordnung zur Durchführung des Verfahrens nach dem Oberbegriff des Patentanspruchs 5.

Insbesondere im militärischen Bereich aber auch im zivilen Bereich, beispielsweise beim Werkschutz großer Industrie- oder Kraftwerksanlagen, ist es erforderlich, mittels elektromagnetischer Wellen eine Zielerkennung und/oder Zielklassifikation vorzunehmen. Bei der sogenannten Zielerkennung Freund-Feind, die im englischen auch IFF (Identification Friend-Foe) genannt wird, wird von einer abfragenden Sende/Empfangsanordnung (Interrogator) eine abfragende elektromagnetische Welle ausgesandt, beispielsweise mittels einer Sendeantenne. Bei einem sogenannten Freund-Ziel, beispielsweise einem Land-, See- oder Luftfahrzeug, das zu demselben Truppenverband wie der Interrogator gehört, wird nun die abfragende elektromagnetische Welle von einem sogenannten Transponder, der sich an Bord des Freund-Zieles befindet, empfangen. Daraufhin wird von dem Transponder eine codierte antwortende elektromagnetische Welle ausgesandt. Diese wird von dem Interrogator empfangen und ausgewertet. Anhand der Codierung kann nun entschieden werden, ob das detektierte Ziel als Freund-Ziel oder als Feind-Ziel zu behandeln ist.

Es ist ersichtlich, daß insbesondere ein Interrogator beim Aussenden der abfragenden elektromagnetischen Welle, insbesondere einer räumlich ungerichtet ausgesandten, von einem Feind-Ziel sehr frühzeitig detektiert, geortet (lokalisiert) und angegriffen werden kann. Zur Vermeidung dieses Nachteils ist es naheliegend, daß von dem Interrogator auf ein vorgebbares unbekanntes Ziel eine räumlich gerichtete abfragenden elektromagnetischen Welle ausgesandt wird. Denn diese kann dann nur von diesem Ziel empfangen und ausgewertet werden.

Der Erfindung liegt die Aufgabe zugrunde, ein gattungsgemäßes Verfahren anzugeben, mit dem eine zuverlässige Arbeitsweise des Interrogator/Transponder-Systems ermöglicht wird und mit dem insbesondere eine Detektion des Interrogators sowie eine Störung von dessen Arbeitsweise vermieden werden. Der Erfindung liegt außerdem die Aufgabe zugrunde, eine Anordnung zur Durchführung des Verfahrens anzugeben.

Diese Aufgabe wird gelöst durch die in den kennzeichnenden Teilen der Patentansprüche 1 und 5 angegebenen Merkmale.

Vorteilhafte Ausgestaltungen und/oder Weiterbildungen sind den weiteren Ansprüchen entnehmbar.

Ein erster Vorteil der Erfindung besteht darin, daß bei dem Interrogator zumindest die abfragende Welle im Bereich der Millimeter-Wellen (mmW) liegt. Denn solche Wellen können gut gebündelt (räumlich gerichtet) werden und sind außerdem unempfindlich gegenüber von Umwelteinflüssen, insbesondere Niederschlägen wie Nebel, Dampf, Rauch, Regen sowie Schneefall. Außerdem kann bei Millimeter-Wellen in kostengünstiger Weise mit vorgebbarer Sendeleistung gearbeitet werden, so daß eine vorgebbare maximale Reichweite der abfragenden Welle vorherbestimmbar ist.

Ein zweiter Vorteil besteht darin, daß bei einem vorgebbaren Reichweitenbereich der abfragenden Welle, beispielsweise innerhalb eines Bereiches von 5 km bis 10 km, eine hohe räumliche Auflösung, beispielsweise ungefähr 100 m, ermöglicht wird.

Ein dritter Vorteil besteht darin, daß innerhalb einer vorgebbar kurzen Zeit, beispielsweise innerhalb einer Sekunde, eine hohe Identifikationswahrscheinlichkeit, beispielsweise größer 0,9, erreichbar ist.

Ein vierter Vorteil besteht darin, daß sowohl der Interrogator als auch der Transponder in mmW-Technologie herstellbar sind, denn dadurch sind beispielsweise bei dem Interrogator benötigte Baugruppen auch in dem Transponder verwendbar, es wird ein sogenannter modularer Aufbau verwendet.

Ein fünfter Vorteil besteht darin, daß aufgrund der mmW-Technologie, die in integrierter Technologie ausführbar ist, sowohl der Interrogator als auch der Transponder räumlich klein, mechanisch robust sowie kostengünstig herstellbar sind, insbesondere bei einer industriellen Serienproduktion.

Ein sechster Vorteil besteht darin, daß während eines eigenen Identifizierungsvorganges sämtliche mögliche Fremdabfragen sowie mögliche Antwortsignale selbst in einer elektronisch gestörten Umgebung bearbeitet werden.

Ein siebter Vorteil besteht darin, daß keine Frequenztrennung zwischen Abfrage- und Antwortsignalen erforderlich ist. Dadurch sind ansonsten erforderliche Maßnahmen zur Frequenzstabilisierung und/oder zur Gewährleistung einer Langzeitstabilität nicht erforderlich.

Weitere Vorteile ergeben sich aus der nachfolgenden Beschreibung.

Die Erfindung wird im folgenden anhand von Ausführungsbeispielen unter Bezugnahme auf eine schematisch dargestellte Figur näher erläutert. Diese zeigt
ein Blockbild einer Anordnung, die als Interrogator oder als Transponder verwendbar ist.

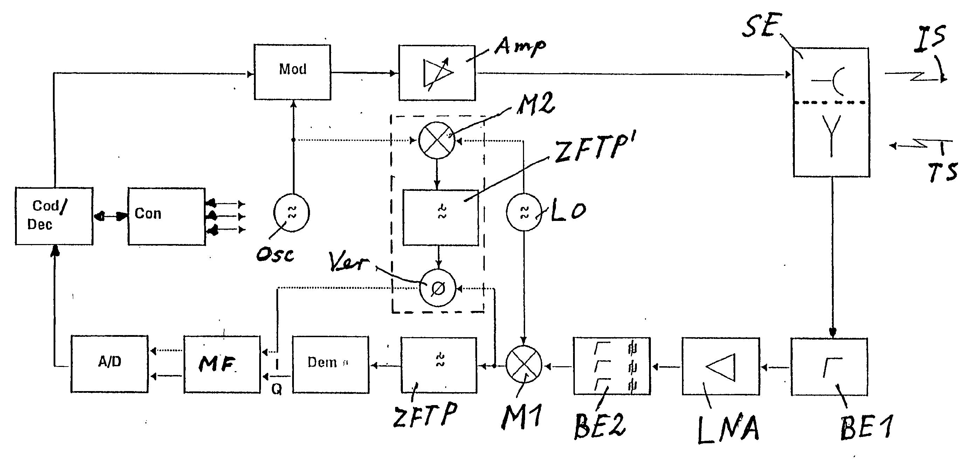

Die Figur zeigt ein Blockbild eines Interrogators, also einer Anordnung, die eine codierte abfragende Millimeterwelle aussenden und eine entsprechend codierte Antwort eines Transponders auswerten kann. Der Interrogator ist modular (in Modulen) aufgebaut, vorzugsweise vollständig in Halbleitertechnik, beispielsweise in sogenannter GaAs-MMIC-Technologie. Diese ermöglicht lediglich eine geringe Sendeleistung, beispielsweise maximal 1 Watt, so daß dadurch die Reichweite der abfragenden Welle (Sendereichweite) auf einen vorgebbaren Wert beschränkt ist. Ein außerhalb dieser Reichweite befindlicher Empfänger kann den Interrogator daher vorteilhafterweise nicht detektieren. Ein solcher Interrogator ist mechanisch robust und räumlich klein herstellbar, beispielsweise mit einem Volumen von ungefähr einem Liter. Werden bei einem solchen Interrogator einige vorgebbare Module (Baugruppen) geändert oder weggelassen, so entsteht ein Transponder, der lediglich auf eine codierte abfragende Welle (vom Interrogator ausgesandt) eine entsprechend einer vorgebbaren Transponder-Kennung codierte antwortende Welle aussenden kann. Abfragende und antwortende Welle liegen vorzugsweise in demselben Wellenlängenbereich. Die zugehörigen Sende- und/oder Empfangssignale liegen beispielsweise bei einer vorgebbaren Frequenz oder einem vorgebbaren Frequenzband in einem Frequenzbereich von ungefähr 35 GHz bis 100 GHz. Es ist ersichtlich, daß zumindest einige der nachfolgend beschriebenen Module an die gewählten Sende/Empfangsfrequenzen angepaßt werden müssen, beispielsweise durch eine entsprechend gewählte Leitungstechnologie und/oder durch Auswahl von integrierten Halbleiterschaltungen, die auf diese Frequenzen abgestimmt sind.

In dem Interrogator entsprechend der Figur wird die codierte abfragende Welle erzeugt mittels eines vorzugsweise digital arbeitenden Kontrollers Con, der einerseits an einen ebenfalls digital arbeitenden Codierer/Decodierer Cod/Dec angeschlossen ist und andererseits (dargestellt durch drei Pfeile) an eine nicht dargestellte Auswerte- und/oder Anzeigeeinheit sowie bedarfsweise über ein sogenanntes Interface an eine Datenverarbeitungsanlage oder an ein Cryptogerät. Mittels des Kontrollers Con sowie des Codierers Cod wird nun mindestens ein vorgebbares digitales Codewort erzeugt, das für eine Zielerkennung Freund-Feind geeignet ist und das an einen Eingang eines Modulators Mod gelegt wird. An dessen anderen Eingang wird ein Ausgangssignal eines Oszillators Osc gelegt, der ein Trägersignal mit einer vorgebbaren Frequenz aus dem erwähnten Frequenzbereich von 35 GHz bis 100 GHz erzeugt. Für den Oszillators Osc kann vorteilhafterweise ein technisch einfach aufgebauter Frequenzgenerator, der lediglich eine geringe Frquenzstabilität besitzt, verwendet werden. Am Ausgang des Modulators Mod, der beispielsweise in der Art eines Ringmodulators aufgebaut ist, entsteht ein entsprechend dem Codewort binär phasenmoduliertes Signal, das über einen analog arbeitenden Verstärker Amp, dessen Verstärkung bedarfsweise, vorzugsweise elektrisch, einstellbar ist, an eine Sende-/Empfangsantennen-Anordnung SE gelegt wird, die auf die gewählten vorgebbaren Sende/Empfangs-Frequenzen abgestimmt ist. Es ist vorteilhaft, wenn die Sende-/Empfangsantennen-Anordnung SE eine gute vorgebbare Richtcharakteristik besitzt, das heißt, als Sende/Empfangs-Richtantenne ausgebildet ist. Denn dann kann beispielsweise ein Sendesignal IS (codierte abfragende Welle) mit einem Öffnungswinkel von maximal 10° ausgesandt werden. Ein solches eng gebündeltes Sendesignal kann beispielsweise direkt auf ein zu identifizierendes Ziel, beispielsweise ein Land-, Luft- oder Wasserfahrzeug oder eine Person, die einen Transponder besitzt, gerichtet werden. Aufgrund der Richtwirkung kann dieses Sendesignal dann von einem dem Ziel möglicherweise benachbarten Ziel nicht empfangen und ausgewertet werden, so daß eine Entdeckung des Interrogators vermieden wird. Besitzt nun das ausgewählte zu identifizierende Ziel einen nachfolgend noch näher erläuterten Transponder, so wird von diesem das Sendesignal IS des Interrogators empfangen und daraufhin ein ebenfalls codiertes moduliertes Transponder-Signal TS ausgesandt. Dieses liegt vorzugsweise in demselben Frequenzbereich wie das Sendesignal (des Interrogators). Weder bei dem Interrogator noch bei dem Transponder wird vorteilhafterweise keine Frequenzverschiebung zwischen dem Sende- und dem Empfangssignal benötigt. Sind Sende- und Empfangssignal in demselben Frequenzbereich vorhanden, so ist an sich eine störende sogenannte Selbstabfrage möglich, das heißt, bei dem Interrogator kann beispielsweise infolge einer Reflexion ein Teil des Sendesignals in den Empfangskanal eingekoppelt und dort in unerwünschter Weise ausgewertet werden. Eine solche Selbstabfrage ist vermeidbar, was nachfolgend noch näher erläutert wird. Das Transponder-Signal TS wird nun von dem Interrogator empfangen mittels derselben Sende-/Empfangsantennen-Anordnung SE, also ebenfalls mittels der Sende/Empfangs-Richtantenne. Das im Interrogator empfangene Transponder-Signal TS gelangt nun über einen ersten (Amplituden-)Begrenzer BE1, der vorzugsweise aus passiven Bauelementen aufgebaut ist, an einen möglichst rauscharmen (Antennen-)Vorverstärker LNA. Dabei ist der erste (Amplituden-)Begrenzer BE1 derart aufgebaut, daß eine Störung oder sogar Zerstörung des nachgeschalteten (Antennen-)Vorverstärker LNA vermieden wird, beispielsweise durch dem Transponder-Signal überlagerte Störimpulse mit einer hohen Spitzenleistung. Das Ausgangssignal des (Antennen-)Vorverstärker LNA wird nun einem zweiten Begrenzen BE2 zugeleitet. Dieser enthält eine vorgebbare Anzahl von vorzugsweise gleichartigen, parallel geschalteten (Durchlaß-Filter-)Kanälen. Diese ermöglichen eine vorgebbare (Frequenz-)Filterung des (Transponder-)Signals, beispielsweise entsprechend dem zu erwartenden und auszuwertenden Spektrum, das von der gewählten Codierung (des Transponder-Signals) abhängt. In Abhängigkeit von den zu erwartenden unterschiedlichen Amplituden, die ebenfalls von der Codierung (des Transponder-Signals) abhängen, wird in den Kanälen bedarfsweise eine unterschiedliche Amplitudenbegrenzung durchgeführt. Eine solche frequenzselektive mehrkanalige Begrenzung ermöglicht eine Unterdrückung des Einflusses von Störsignalen, die beispielsweise ein breitbandiges störendes Frequenzspektrum erzeugen. Die analogen Ausgangssignale der (Filter-)Kanäle des zweiten Begrenzers BE2 werden zusammengefaßt (addiert) und einem Eingang eines ersten Mischers M1 zugeführt. An dem anderen Eingang des ersten Mischers M1 liegt das Ausgangssignal eines lokalen Oszillators LO, der mit dem Oszillator Osc synchronisiert ist. An dem Ausgang des ersten Mischers M1 entsteht in einem vorgebbaren Zwischenfrequenzbereich ein Zwischenfrequenzsignal. Dieses wird nach einer (Zwischenfrequenz-)Tiefpaßfilterung ZFTP einem Quadratur-Demodulator Dem zugeführt. An dessen Ausgang entstehen orthogonale Signale I,Q. Diese werden mittels eines sogenannten Matched Filters MF (an die Codierung der Sendesignale des Transponders angepaßtes Filter) gefiltert, so daß an dessen Ausgang ein analoges Signal entsteht, welches die Codierung des Transpondersignals TS enthält. Das Ausgangssignal des Matched Filters MF wird nun mittels eines Analog/Digital-Wandlers A/D digitalisiert und mittels des Decodierers Dec sowie des Kontrollers Con ausgewertet. An dessen Ausgang entsteht beispielsweise ein Ja/Nein-Signal, das anzeigt, ob das erfaßte Ziel als Freund-Ziel (Ja Signal) oder als Feind-Ziel (Nein-Signal) zu klassifizieren ist.

Bei der beschriebenen Anordnung ist es unter ungünstigen Umständen in nachteiliger Weise möglich, daß das von dem Interrogator ausgesandte Sendesignal in die eigene Empfangsantenne eingekoppelt und dann in der beschriebenen Weise ausgewertet wird. Es entsteht eine störende sogenannte Selbstabfrage (Eigenabfrage). Diese kann bedarfsweise unterdrückt werden mittels einer Unterdrückungsschaltung, die in der Figur durch eine gestrichelte Linie umrandet ist und deren Funktion nachfolgend beschrieben wird. Zur Vermeidung einer Eigenabfrage werden die Ausgangssignale des Oszillators Osc und des lokalen Oszillators Lo einem zweiten Mischer M2 zugeführt, dort durch eine Abwärtsmischung in einen vorgebbaren Frequenzbereich umgesetzt und mittels eines Tiefpaßfilters ZFTP' gefiltert. Das entstehende Ausgangssignal und dasjenige des ersten Mischers M1 werden jeweils einem Eingang eines weiteren Demodulators Ver, beispielsweise eines Phasendemodulators, zugeführt. An dessen Ausgang entsteht im Videobereich ein vollständig demoduliertes Signal, das dem Matched Filter MF und der weiteren vorstehend beschriebenen Auswerteschaltung zugeleitet wird. Mittels des Decoders Dec sowie des Controllers Con kann dann beispielsweise ermittelt werden, ob in dem Ausgangssignal des ersten Mischers M1 eine Codierung vorhanden ist, welche dem Sendesignal des Interrogators zuzuordnen ist. Diese Codierung, welche einer Selbstabfrage entspricht, kann bedarfsweise bei der weiteren Auswertung unterdrückt werden. Zusätzlich oder alternativ kann mittels dieser Unterdrückungsschaltung bei einem Abfragevorgang außerdem vorteilhafterweise geprüft werden, ob dieser einwandfrei ist.

Von dem beschriebenen Interrogator unterscheidet sich ein zu dem System gehörender Transponder im wesentlichen dadurch, daß eine Sende/Empfangs-Antennenanordnung mit einer Rundstrahlcharakteristik verwendet wird, das heißt, der Transponder kann nahezu aus allen Richtungen empfangen und in nahezu alle Richtungen senden. Weiterhin muß seitens des Transponders lediglich veranlaßt werden, daß auf ein von diesem empfangenes und anschließend decodiertes Sendesignal des Interrogators ein dem Transponder zugeordnetes codiertes Transpondersignal TS ausgesandt wird. Dieser Vorgang wird mittels des Codierers Cod sowie des Kontrollers Con, der beispielsweise als digital arbeitender Microprozessor ausgebildet ist, durchgeführt.

Das beschriebene Interrogator/Transponder-System ist vorteilhafterweise dopplertolerant, das heißt auch für bewegte Interrogatoren und/oder Transponder verwendbar, wobei die gewählte Kodierung nahezu vernachlässigbar ist.

Außerdem ermöglicht das beschriebene Interrogator/Transponder-System vorteilhafterweise die Verwendung einer DBPSK (Differential Binary Phase-Shift Keying)-Modulation sowie ein darauf abgestimmtes Demodulationsverfahren. Diese ermöglichen eine vorgebbar hohe Systembandbreite, so daß eine sogenannte Spead-Spectrum-Technik (gespreizte Spektrum Technik) anwendbar ist. Diese ist infolge darauf abgestimmter Kodierung vorteilhafterweise besonders unempfindlich gegen unabsichtliche und/oder absichtliche Störungen, beispielsweise sogenannte Puls-, Schmalband-Dauerstrich- und/oder Breitband-Rauschstörungen sowie sogenannte Fruits-, Garbling- und/oder Umwegreflexions-Störungen.

Es ist ersichtlich, daß die erwähnte hohe Identifikationswahrscheinlichkeit, beispielsweise größer 0,9, die innerhalb einer vorgebbar kurzen Zeit, beispielsweise innerhalb einer Sekunde, erreichbar ist, abhängt von der gewählten Kodierung und davon, wie oft eine Abfragesignal des Interrogators und/oder ein Transponder-Antwortsignal wiederholt und ausgewertet wird.

Die Erfindung ist nicht auf die beschriebenen Beispiele beschränkt, sondern sinngemäß auf weitere anwendbar. Beispielsweise ist es möglich, bei dem Interrogator die Sende-/Empfangsantennen-Anordnung als mechanisch rotierende Anordnung oder als Anordnung mit Rundum-Charakteristik auszubilden. Weiterhin können Sende- und Empfangsantenne als getrennte Anordnungen ausgebildet werden, so daß beispielsweise in vorgebbarer Weise polarisierte Signale ausgesandt und/oder empfangen und ausgewertet werden können.

## Patentansprüche

1. Verfahren zur Zielerkennung Freund-Feind, wobei
- von einem Interrogator an ein zu identifizierendes Ziel eine abfragende elektromagnetische Welle ausgesandt wird,
- von dem zu identifizierenden Ziel, sofern dieses einen auf die abfragende elektromagnetische Welle abgestimmten Transponder besitzt, bedarfsweise die abfragende elektromagnetische Welle empfangen wird und daraufhin von dem Transponder eine antwortende elektromagnetische Welle ausgesandt wird und
- die von dem Transponder ausgesandte antwortende elektromagnetische Welle von dem Interrogator empfangen und ausgewertet wird derart, daß bei Vorliegen eines vorgebbaren Antwortcodes des Transponders das zugehörige zu identifizierendes Ziel als ein Freund-Ziel klassifiziert wird, **dadurch gekennzeichnet,**
- **daß** vom dem Interrogator die abfragende elektromagnetische Welle im Millimeter-Wellenlängenbereich mit vorgebbarer mittlerer Wellenlänge, vorgebbarer Richtcharakteristik, vorgebbarer maximaler Reichweite sowie vorgebbarer Kodierung gerichtet auf das zu identifizierende Ziel ausgesandt wird,
- **daß** die abfragende elektromagnetische Welle von dem Transponder mittels einer Empfangsantenne mit im wesentlichen ungerichteter Empfangscharakteristik empfangen wird, die daraufhin ausgesandte antwortende elektromagnetische Welle im wesentlichen ungerichtet ausgesandt wird und in demselben Millimeter-Wellenlängenbereich liegt wie die abfragende elektromagnetische Welle,
- **daß** die von dem Transponder ausgesandte antwortende elektromagnetische Welle von dem Interrogator empfangen wird mittels einer auf das zu indentifizierende Ziel gerichteten Empfangsantenne mit vorgebbarer Empfangs-Richtcharakteristik,
- **daß** in dem Interrogator die empfangene antwortende elektromagnetische Welle über einen ersten Begrenzer (BE1), einen rauscharmen Vorverstärker (LNA) sowie einen zweiten Begrenzer (BE2) einem ersten Mischer (M1) zugeleitet wird, mittels diesem sowie eines von einem lokalen Oszillator (LO) erzeugten Signals, mit vorgebbarer Frequenz, in einen vorgebbaren Zwischenfrequenzbereich umgesetzt und nach einer vorgebbaren Tiefpaßfilterung (ZFTP) in einem Quadratur-Demodulator (DEM) demoduliert wird, so daß im Videobereich orthogonale Signale entstehen,
- **daß** die orthogonalen Signale mittels eines auf die verwendete Kodierung der antwortenden Welle abgestimmtes Matched Filters (MF) in ein analoges Signal und anschließend mittels eines Analog/Digital-Wandlers (A/D) in ein digitales Signal umgesetzt werden und
- **daß** das digitale Signal zumindest mittels eines Decodierers (Dec) sowie eines Kontrollers (Con) decodiert und ausgewertet wird derart, daß anhand der Kodierung eine Zielerkennung Freund-Feind ermöglicht wird.

2. Verfahren zur Zielerkennung Freund-Feind nach Anspruch 1, **dadurch gekennzeichnet, daß** in dem ersten Begrenzer (BE1) eine Amplitudenbegrenzung des empfangenen Signals mittels eine Schaltungsanordnung aus passiven Bauelementen durchgeführt wird.

3. Verfahren zur Zielerkennung Freund-Feind nach Anspruch 1 oder Anspruch 2, **dadurch gekennzeichnet,**
- **daß** in dem zweiten Begrenzer (BE2) eine vorgebbare Anzahl mehrerer parallel geschalteter Kanäle verwendet wird,
- **daß** in jedem der Kanäle eine vorgebbare Begrenzung bezüglich der Amplitude sowie des Frequenzbandes der durchzulassenden Signale erfolgt und
- **daß** die Anzahl der Kanäle sowie die in jedem Kanal durchzuführende Begrenzung in Abhängigkeit von der gewählten Kodierung gewählt wird derart, daß unerwünschte empfangene Störsignale weitgehendst unterdrückt werden.

4. Verfahren zur Zielerkennung Freund-Feind nach einem der vorhergehenden Ansprüche, **dadurch gekennzeichnet,**
- **daß** zur Unterdrückung einer Selbstabfrage das von dem zur Erzeugung der abfragenden Welle benötigten Oszillators (Osc) erzeugte Signal sowie das von dem lokalen Oszillator (LO) erzeugte Signal in einem zweiten Mischer (M2) gemischt, anschließend in einem weiteren Tiefpaßfilter (ZFTP') gefiltert und an einen Eingang eines Demodulators (Ver) gelegt werden,
- **daß** an den anderen Eingang des Demodulators (Ver) das von dem ersten Mischer (M1) erzeugte Zwischenfrequenzsignal gelegt wird und
- **daß** das von dem Demodulator (Ver) erzeugte Ausgangssignal mittels des Matched Filters (MF) sowie der diesem nachgeschalteten Auswerteschaltung auf das Vorliegen einer dem Abfragesignal zuzuordnenden Codierung überprüft wird.

5. Anordnung zur Durchführung des Verfahrens zur Zielerkennung Freund-Feind, mit einem Interrogator und einem Transponder, wobei
- vom Interrogator an ein zu identifizierendes Ziel eine abfragende elektromagnetische Welle ausgesandt wird,
- von dem zu identifizierenden Ziel, sofern dessen Transponder auf die abfragende elektromagnetische Welle abgestimmt ist, bedarfsweise die abfragende elektromagnetische Welle empfangen wird und daraufhin von dem Transponder eine antwortende elektromagnetische Weile ausgesandt wird und
- die von dem Transponder ausgesandte antwortende elektromagnetische Welle von dem Interrogator empfangen und ausgewertet wird derart, daß bei Vorliegen eines vorgebbaren Antwortcodes des Transponders das zugehörige zu identifizierendes Ziel als ein Freund-Ziel klassifiziert wird, **dadurch gekennzeichnet,**
- **daß** in dem Interrogator und dem Transponder im wesentlichen die gleichen elektronischen Baugruppen vorhanden sind,
- **daß** vom Interrogator die abfragende elektromagnetische Welle im Millimeter-Wellenlängenbereich mit vorgebbarer mittlerer Wellenlänge, vorgebbarer Richtcharakteristik, vorgebbarer maximaler Reichweite sowie vorgebbarer Kodierung gerichtet auf das zu identifizierende Ziel ausgesandt wird,
- **daß** die abfragende elektromagnetische Welle von dem Transponder mittels einer Empfangsantenne mit im wesentlichen ungerichteter Empfangscharakteristik empfangen wird, die daraufhin ausgesandte antwortende elektromagnetische Welle im wesentlichen ungerichtet ausgesandt wird und in demselben Millimeter-Wellenlängenbereich liegt wie die abfragende elektromagnetische Welle,
- **daß** die von dem Transponder ausgesandte antwortende elektromagnetische Welle von dem Interrogator empfangen wird mittels einer auf das zu indentifizierende Ziel gerichteten Empfangsantenne mit vorgebbarer Empfangs-Richtcharakteristik,
- **daß** in dem Interrogator die empfangene antwortende elektromagnetische Welle über einen ersten Begrenzer (BE1), einen rauscharmen Vorverstärker (LNA) sowie einen zweiten Begrenzer (BE2) einem ersten Mischer (M1) zugeleitet wird, mittels diesem sowie eines von einem lokalen Oszillator (LO) erzeugten Signals, mit vorgebbarer Frequenz, in einen vorgebbaren Zwischenfrequenzbereich umgesetzt und nach einer vorgebbaren Tiefpaßfilterung (ZFTP) in einem Quadratur-Demodulator (DEM) demoduliert wird, so daß im Videobereich orthogonale Signale entstehen,
- **daß** die orthogonalen Signale mittels eines auf die verwendete Kodierung der antwortenden Welle abgestimmtes Matched Filters (MF) in ein analoges Signal und anschließend mittels eines Analog/Digital-Wandlers (A/D) in ein digitales Signal umgesetzt werden und
- **daß** das digitale Signal zumindest mittels eines Decodierers (Dec) sowie eines Kontrollers (Con) decodiert und ausgewertet wird derart, daß anhand der Kodierung eine Zielerkennung Freund-Feind ermöglicht wird,
- **daß** sich Interrogator und Transponder lediglich **dadurch** unterscheiden,
**daß** bei dem Interrogator eine Sende/Empfangs-Richtantenne vorhanden ist, während der Transponder eine Sende/Empfangs-Rundstrahlantenne besitzt und
**daß** bei dem Transponder der Kontroller (Con) derart ausgebildet ist, daß ein Abfragemodus verhindert ist.

## Claims

1. Method for target identification friend or foe, in which:
- an interrogator transmits an interrogating electromagnetic wave to a target to be identified,
- the interrogating electromagnetic wave is received as required by the target to be identified, provided that it has a transponder which is matched to the interrogating electromagnetic wave, and a responding electromagnetic wave is then transmitted by the transponder, and
- the responding electromagnetic wave which is transmitted by the transponder is received by the interrogator and is evaluated in such a manner that, when a predeterminable response code from the transponder is present, the associated target to be identified is classified as a friendly target, **characterized**
- **in that** the interrogator transmits the interrogating electromagnetic wave in the millimetric wavelength range at a predeterminable mean wavelength, with a predeterminable directional characteristic, with a predeterminable maximum range and with a predeterminable coding, directed at the target to be identified,
- **in that** the interrogating electromagnetic wave is received by the transponder by means of a receiving antenna with an essentially omnidirectional reception characteristic, the responding electromagnetic wave which is transmitted in response to this is transmitted essentially omnidirectionally and is in the same millimetric wavelength range as the interrogating electromagnetic wave,
- **in that** the responding electromagnetic wave which is transmitted by the transponder is received by the interrogator by means of a receiving antenna which is directed at the target to be identified and has a predeterminable reception directional characteristic,
- **in that** the received responding electromagnetic wave is passed to a first mixer (M1) in the interrogator via a first limiter (BE1), a low-noise preamplifier (LNA) and a second limiter (BE2), is converted to a predeterminable intermediate-frequency range by means of this first mixer (M1), together with a signal which is produced by a local oscillator (LO) and is at a predeterminable frequency, and, after predeterminable low-pass filtering (ZFTP) in a quadrature demodulator (DEM) is demodulated so that orthogonal signals are produced in the video range,
- **in that** the orthogonal signals are converted to an analogue signal by means of a matched filter (MF) which is matched to the coding used in the responding wave, and are then converted to a digital signal by means of an analogue/digital converter (A/D), and
- **in that** the digital signal is decoded and evaluated at least by means of a decoder (Dec) and a controller (Con), in such a way as to allow target identification friend or foe on the basis of the coding.

2. Method for target identification friend or foe according to Claim 1, **characterized in that** amplitude limiting of the received signal is carried out in the first limiter (BE1) by means of a circuit arrangement composed of passive components.

3. Method for target identification friend or foe according to Claim 1 or Claim 2, **characterized**
- **in that** a predeterminable number of parallel-connected channels are used in the second limiter (BE2),
- **in that** predeterminable limiting with respect to the amplitude and the frequency band of the signals to be passed through is carried out in each of the channels, and
- **in that** the number of channels as well as the limiting to be carried out in each channel are chosen as a function of the desired coding in such a manner that undesirable received interference signals are suppressed as much as possible.

4. Method for target identification friend or foe according to one of the preceding claims, **characterized**
- **in that**, in order to suppress self-interrogation, the signal which is produced by the oscillator (Osc) that is required to produce the interrogating wave, and the signal which is produced by the local oscillator (LO), are mixed in a second mixer (M2) and then filtered in a further low-pass filter (ZFTP'), and are passed to an input of a demodulator (Ver),
- **in that** the intermediate-frequency signal which is produced by the first mixer (M1) is applied to the other input of the demodulator (Ver), and
- **in that** the output signal which is produced by the demodulator (Ver) is checked by means of the matched filter (MF) and the evaluation circuit which is connected downstream from it for the presence of coding which can be associated with the interrogation signal.

5. Arrangement for carrying out the method for target identification friend or foe having an interrogator and a transponder, in which:
- the interrogator transmits an interrogating electromagnetic wave to a target to be identified,
- the interrogating electromagnetic wave is received as required by the target to be identified, provided that its transponder is matched to the interrogating electromagnetic wave, and a responding electromagnetic wave is then transmitted by the transponder, and
- the responding electromagnetic wave which is transmitted by the transponder is received by the interrogator and is evaluated in such a manner that, when a predeterminable response code from the transponder is present, the associated target to be identified is classified as a friendly target, **characterized**
- **in that** essentially the same electronic assemblies are provided in the interrogator and in the transponder,
- **in that** the interrogator transmits the interrogating electromagnetic wave in the millimetric wavelength range at a predeterminable mean wavelength, with a predeterminable directional characteristic, with a predeterminable maximum range and with a predeterminable coding, directed at the target to be identified,
- **in that** the interrogating electromagnetic wave is received by the transponder by means of a receiving antenna with an essentially omnidirectional reception characteristic, the responding electromagnetic wave which is transmitted in response to this is transmitted essentially omnidirectionally and is in the same millimetric wavelength range as the interrogating electromagnetic wave,
- **in that** the responding electromagnetic wave which is transmitted by the transponder is received by the interrogator by means of a receiving antenna which is directed at the target to be identified and has a predeterminable reception directional characteristic,
- **in that** the received responding electromagnetic wave is passed to a first mixer (M1) in the interrogator via a first limiter (BE1), a low-noise preamplifier (LNA) and a second limiter (BE2), is converted to a predeterminable intermediate-frequency range by means of this first mixer (M1), together with a signal which is produced by a local oscillator (LO) and is at a predeterminable frequency, and, after predeterminable low-pass filtering (ZFTP) in a quadrature demodulator (DEM) is demodulated so that orthogonal signals are produced in the video range,
- **in that** the orthogonal signals are converted to an analogue signal by means of a matched filter (MF) which is matched to the coding used in the responding wave, and is then converted to a digital signal by means of an analogue/digital converter (A/D), and
- **in that** the digital signal is decoded and evaluated at least by means of a decoder (Dec) and a controller (Con), in such a way as to allow target identification friend or foe on the basis of the coding,
- **in that** the interrogator and the transponder differ only
**in that** the interrogator has a directional transmitting/receiving antenna while the transponder has an omnidirectional transmitting/receiving antenna, and
**in that** the controller (Con) in the transponder is designed in such a manner that an interrogation mode is inhibited.

## Revendications

1. Procédé d'identification ami-ennemi, dans lequel
- une onde électromagnétique d'interrogation est émise par un interrogateur vers une cible à identifier,
- l'onde électromagnétique est au besoin reçue par la cible à identifier, dans la mesure où celle-ci possède un transpondeur accordé à l'onde électromagnétique d'interrogation, et ensuite une onde électromagnétique de réponse est émise par le transpondeur, et
- l'onde électromagnétique de réponse émise par le transpondeur est reçue et évaluée par l'interrogateur de telle manière que, en cas de présence d'un code de réponse prédéterminable du transpondeur, la cible correspondante à identifier soit classée comme une cible amie,
**caractérisé en ce que**
- l'onde électromagnétique d'interrogation est émise par l'interrogateur dans le domaine des longueurs d'onde millimétriques avec une longueur d'onde moyenne prédéterminable, une caractéristique directionnelle prédéterminable, une portée maximale prédéterminable ainsi qu'un codage prédéterminable, en direction de la cible à identifier,
- l'onde électromagnétique d'interrogation est reçue par le transpondeur au moyen d'une antenne réceptrice avec une caractéristique de réception essentiellement non directionnelle, l'onde électromagnétique de réponse émise ensuite est émise essentiellement sans direction et dans le même domaine de longueurs d'onde millimétriques que l'onde électromagnétique d'interrogation,
- l'onde électromagnétique de réponse émise par le transpondeur est reçue par l'interrogateur au moyen d'une antenne réceptrice dirigée vers la cible à identifier avec une caractéristique de réception directionnelle prédéterminable,
- dans l'interrogateur, l'onde électromagnétique de réponse reçue est transmise à un premier mélangeur (M1) via un premier limiteur (BE1), un préamplificateur à faible bruit (LNA) ainsi qu'un deuxième limiteur (BE2), convertie au moyen de celui-ci ainsi que d'un signal produit par un oscillateur local (LO), avec une fréquence prédéterminable, en un domaine de fréquence intermédiaire prédéterminable et, après un filtrage passe-bas prédéterminable (ZFTP), démodulée dans un démodulateur à quadrature (DEM), de telle manière qu'il apparaisse des signaux orthogonaux dans le domaine vidéo,
- les signaux orthogonaux sont convertis en un signal analogique au moyen d'un filtre adapté (MF) accordé sur le codage utilisé de l'onde de réponse et ensuite convertis en un signal numérique au moyen d'un convertisseur analogique/numérique (A/D), et
- le signal numérique est décodé et évalué au moins au moyen d'un décodeur (Dec) ainsi que d'un contrôleur (Con) de telle manière qu'une identification ami-ennemi soit possible à l'aide du codage.

2. Procédé d'identification ami-ennemi selon la revendication 1, **caractérisé en ce que** l'on effectue, dans le premier limiteur (BE1), une limitation d'amplitude du signal reçu au moyen d'un circuit constitué de modules passifs.

3. Procédé d'identification ami-ennemi selon la revendication 1 ou la revendication 2, **caractérisé en ce que**
- dans le deuxième limiteur (BE2), on utilise un nombre prédéterminable de plusieurs canaux connectés en parallèle,
- dans chacun des canaux, on effectue une limitation prédéterminable en ce qui concerne l'amplitude ainsi que la bande de fréquence des signaux à transmettre, et
- on choisit le nombre des canaux ainsi que la limitation à opérer dans chaque canal en fonction du codage choisi, de telle manière que des signaux perturbateurs indésirables reçus soient très largement supprimés.

4. Procédé d'identification ami-ennemi selon l'une quelconque des revendications précédentes, **caractérisé en ce que**
- pour supprimer une auto-interrogation, le signal produit par l'oscillateur (Osc) nécessaire pour la production de l'onde d'interrogation ainsi que le signal produit par l'oscillateur local (LO) sont mélangés dans un deuxième mélangeur (M2), puis filtrés dans un autre filtre passe-bas (ZFTP') et appliqués à une entrée d'un démodulateur (Ver),
- le signal à fréquence intermédiaire produit par le premier mélangeur (M1) est appliqué à l'autre entrée du démodulateur (Ver), et
- le signal de sortie produit par le démodulateur (Ver) est contrôlé, quant à la présence d'un codage à associer au signal d'interrogation, au moyen du filtre adapté (MF) ainsi que du circuit d'évaluation qui suit ce dernier.

5. Dispositif pour la mise en oeuvre du procédé d'identification ami-ennemi, avec un interrogateur et un transpondeur, dans lequel
- une onde électromagnétique d'interrogation est émise par l'interrogateur vers une cible à identifier,
- l'onde électromagnétique est au besoin reçue par la cible à identifier, dans la mesure où le transpondeur de celle-ci est accordé à l'onde électromagnétique d'interrogation, et ensuite une onde électromagnétique de réponse est émise par le transpondeur, et
- l'onde électromagnétique de réponse émise par le transpondeur est reçue et évaluée par l'interrogateur de telle manière que, en cas de présence d'un code de réponse prédéterminable du transpondeur, la cible correspondante à identifier soit classée comme une cible amie,
**caractérisé en ce que**
- essentiellement les mêmes modules électroniques sont présents dans l'interrogateur et le transpondeur,
- l'onde électromagnétique d'interrogation est émise par l'interrogateur dans le domaine des longueurs d'onde millimétriques avec une longueur d'onde moyenne prédéterminable, une caractéristique directionnelle prédéterminable, une portée maximale prédéterminable ainsi qu'un codage prédéterminable, en direction de la cible à identifier,
- l'onde électromagnétique d'interrogation est reçue par le transpondeur au moyen d'une antenne réceptrice avec une caractéristique de réception essentiellement non directionnelle, l'onde électromagnétique de réponse émise ensuite est émise essentiellement sans direction et dans le même domaine de longueurs d'onde millimétriques que l'onde électromagnétique d'interrogation,
- l'onde électromagnétique de réponse émise par le transpondeur est reçue par l'interrogateur au moyen d'une antenne réceptrice dirigée vers la cible à identifier avec une caractéristique de réception directionnelle prédéterminable,
- dans l'interrogateur, l'onde électromagnétique de réponse reçue est transmise à un premier mélangeur (M1) via un premier limiteur (BE1), un préamplificateur à faible bruit (LNA) ainsi qu'un deuxième limiteur (BE2), convertie au moyen de celui-ci ainsi que d'un signal produit par un oscillateur local (LO), avec une fréquence prédéterminable, en un domaine de fréquence intermédiaire prédéterminable et, après un filtrage passe-bas prédéterminable (ZFTP), démodulée dans un démodulateur à quadrature (DEM), de telle manière qu'il apparaisse des signaux orthogonaux dans le domaine vidéo,
- les signaux orthogonaux sont convertis en un signal analogique au moyen d'un filtre adapté (MF) accordé sur le codage utilisé de l'onde de réponse et ensuite convertis en un signal numérique au moyen d'un convertisseur analogique/numérique (A/D), et
- le signal numérique est décodé et évalué au moins au moyen d'un décodeur (Dec) ainsi que d'un contrôleur (Con) de telle manière qu'une identification ami-ennemi soit possible à l'aide du codage,
- l'interrogateur et le transpondeur se différencient l'un de l'autre uniquement **en ce que** l'interrogateur comporte une antenne d'émission/réception directionnelle, tandis que le transpondeur comporte une antenne d'émission/réception omnidirectionnelle, et dans le transpondeur, le contrôleur (Con) est configuré de façon à empêcher un mode d'interrogation.
